(19) Europäisches Patentamt / European Patent Office / Office européen des brevets

(11) **EP 4 137 379 B1**

(12) **EUROPEAN PATENT SPECIFICATION**

(45) Date of publication and mention
of the grant of the patent:
**07.05.2025 Bulletin 2025/19**

(21) Application number: **22165287.8**

(22) Date of filing: **30.03.2022**

(51) International Patent Classification (IPC):
**B60W 30/12** $^{(2020.01)}$

(52) Cooperative Patent Classification (CPC):
**B60W 30/12;** B60W 2520/10; B60W 2552/00;
B60W 2552/53; B60W 2554/20; B60W 2554/801

(54) **OBSTACLE AVOIDANCE CONTROL METHOD AND DEVICE**

VERFAHREN UND VORRICHTUNG ZUR HINDERNISVERMEIDUNG

PROCÉDÉ ET DISPOSITIF DE COMMANDE D'ÉVITEMENT D'OBSTACLES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.08.2021 CN 202110965058**

(43) Date of publication of application:
**22.02.2023 Bulletin 2023/08**

(73) Proprietor: **Nio Technology (Anhui) Co., Ltd
Hefei City, Anhui 230611 (CN)**

(72) Inventors:
• LIN, Shuangwu
 **Hefei City, Anhui 230611 (CN)**
• GUO, Daoyan
 **Hefei City, Anhui 230611 (CN)**

(74) Representative: **Vossius & Partner
Patentanwälte Rechtsanwälte mbB
Siebertstraße 3
81675 München (DE)**

(56) References cited:
 **EP-A1- 2 902 290    WO-A1-2016/024318
 JP-A- 2020 050 105**

**Description**

**Technical Field**

The invention relates to the field of autonomous driving, and more particularly to an obstacle avoidance control method and device, and a computer-readable recording medium.

**Background Art**

Advanced driver-assistance systems (ADAS) use various sensors mounted on a vehicle to, during traveling of the automobile, sense the surroundings, collect data, identify, detect, and track still or moving objects, and perform system operations and analysis in combination with navigation map data, allowing for a driver to be aware of potential dangers in advance, thereby effectively improving the comfort and safety of the automobile during traveling.

A lane centering system (LKS) is one of the common key technologies in the advanced driver-assistance systems (ADAS) and is designed to continuously ensure that a vehicle is centered in a lane. In some special scenarios, for example, when obstacles (such as a cone barrel, a square barrel, and a warning post) occupy a lane, keeping the vehicle centered in the lane may pose a risk. In such a case, a reasonable avoidance may be required to avoid the risk posed by the obstacles occupying the lane.

WO 2016/024318 A1 is directed to a travel control device that executes the following: a vehicle information acquisition function for acquiring vehicle information which includes the location of a vehicle; a target information acquisition function for acquiring target information which includes the location of an avoidance target to be avoided by the vehicle; a setting function for setting, in accordance with the location of the avoidance target, a target region; and a control function for calculating a planned route which avoids the target region, and for outputting command information for causing the vehicle to travel on the planned route. The setting function sets the target region so that the target-region width, along the width direction of the lane on which the vehicle travels, becomes wider the shorter the distance, along the vehicle width direction, of the vehicle to the avoidance target.

**Summary of the Invention**

Therefore, the invention provides an obstacle avoidance control method and device for the field of vehicle autonomous driving, so that a vehicle avoids obstacles (e.g., a cone barrel, a square barrel, and a warning post) in a safer and more reliable manner.

According to an aspect of the invention, an obstacle avoidance control method comprising the features of claim 1 is provided, the method including the steps of: receiving vehicle sensor data; calculating an obstacle safe boundary and a lane safe boundary based on the vehicle sensor data; and determining a passing region and a passing status for a current vehicle according to the obstacle safe boundary and the lane safe boundary.

The vehicle sensor data includes a width of a current lane of the current vehicle, a velocity of the current vehicle, a lateral position $D_B$ of the obstacle, and optionally a lateral position $D_V$ of another vehicle. The vehicle sensor data may further include: a lateral velocity, a longitudinal position, and a longitudinal velocity.

The calculating an obstacle safe boundary based on the vehicle sensor data includes: calculating the obstacle safe boundary based on the lateral position $D_B$ of the obstacle, a width $W_V$ of the current vehicle, and a safe distance $D_{S1}$ of the current vehicle from the obstacle, where the safe distance $D_{S1}$ of the current vehicle from the obstacle is related to the velocity of the current vehicle.

The obstacle safe boundary is calculated based on the following formula:

$$\text{Obstacle safe boundary} = D_B - \frac{W_V}{2} - D_{S1}$$

The calculating a lane safe boundary based on the vehicle sensor data includes: calculating the lane safe boundary based on the width $W_R$ of the current lane, the width $W_V$ of the current vehicle, and a safe distance $D_{S2}$ of the current vehicle crossing the current lane, where the safe distance $D_{S2}$ of the current vehicle crossing the current lane is related to a type of the current lane of the current vehicle.

The lane safe boundary is calculated based on the following formula:

$$\text{Lane safe boundary} = \frac{W_R}{2} - \frac{W_V}{2} - D_{S2}$$

Further, according to an embodiment of the aspect of the invention, the passing region for the current vehicle is a region between the obstacle safe boundary and the lane safe boundary.

Further, according to an embodiment of the aspect of the invention, the passing status for the current vehicle includes passable without intervention, passable with intervention, and impassable.

Further, according to an embodiment of the aspect of the invention, the intervention includes adjusting the velocity of the current vehicle, a distance of the current vehicle from the obstacle, and a distance of the current vehicle from the another vehicle.

Further, according to an embodiment of the aspect of the invention, an occupancy proportion of the obstacle in the lane is calculated based on the obstacle safe boundary and the lane safe boundary.

Further, according to an embodiment of the aspect of the invention, the passing status for the current vehicle is set to be passable with intervention when the occupancy proportion of the obstacle in the lane is greater than a first threshold and less than a second threshold.

Further, according to an embodiment of the aspect of the invention, the passing status for the current vehicle is set to be passable without intervention when the occupancy proportion of the obstacle in the lane is less than the first threshold.

Further, according to an embodiment of the aspect of the invention, the passing status for the current vehicle is set to be impassable when the occupancy proportion of the obstacle in the lane is greater than the second threshold.

Further, according to an embodiment of the aspect of the invention, a time to collision (TTC) of the current vehicle with the another vehicle is calculated based on the lateral position $D_V$ of the another vehicle, and the time to collision (TTC) is used to determine whether there is a risk of a collision between the current vehicle and the another vehicle.

Further, according to an embodiment of the aspect of the invention, if there is a risk of a collision between the current vehicle and the another vehicle, a safe constraint boundary of the another vehicle is calculated based on the lateral position $D_V$ of the another vehicle, the width Wv of the current vehicle, and a safe distance $D_{S3}$ of the vehicle from the another vehicle, where the safe distance $D_{S3}$ of the current vehicle from the another vehicle is related to the velocity of the current vehicle.

Further, according to an embodiment of the aspect of the invention,

$$\text{Safe constraint boundary of another vehicle} = D_V - \frac{W_V}{2} - D_{S3}$$

Further, according to an embodiment of the aspect of the invention, the intervention further includes: controlling, based on the safe constraint boundary of the another vehicle, the current vehicle to adjust a distance Dv of the vehicle from the another vehicle in the passing region, so as to avoid the another vehicle.

Further, according to an embodiment of the aspect of the invention, path planning applied to the current vehicle bypassing an obstacle region is generated based on the passing region and the passing status for the current vehicle.

Further, according to an embodiment of the aspect of the invention, lateral-direction and longitudinal-direction control applied to the current vehicle is output based on the generated path planning.

According to another aspect of the invention, an obstacle avoidance control device comprising the features of claim 2 is provided, the device including: a receiving apparatus configured to receive vehicle sensor data; a calculation apparatus configured to calculate an obstacle safe boundary and a lane safe boundary based on the vehicle sensor data; and a determination apparatus configured to determine a passing region and a passing status for a current vehicle according to the obstacle safe boundary and the lane safe

Further, according to an embodiment of the another aspect of the invention, the passing region for the current vehicle is a region between the obstacle safe boundary and the lane safe boundary.

Further, according to an embodiment of the another aspect of the invention, the passing status for the current vehicle includes passable without intervention, passable with intervention, and impassable.

Further, according to an embodiment of the another aspect of the invention, the intervention includes adjusting the velocity of the current vehicle, a distance of the current vehicle from the obstacle, and a distance of the current vehicle from the another vehicle.

Further, according to an embodiment of the another aspect of the invention, the determination apparatus being configured to determine the passing status for the current vehicle includes: calculating an occupancy proportion of the obstacle in the lane based on the obstacle safe boundary and the lane safe boundary.

Further, according to an embodiment of the another aspect of the invention, the determination apparatus is configured to set the passing status for the current vehicle to be passable with intervention when the occupancy proportion of the obstacle in the lane is greater than a first threshold and less than a second threshold.

Further, according to an embodiment of the another aspect of the invention, the determination apparatus is configured to set the passing status for the current vehicle to be passable without intervention when the occupancy proportion of the obstacle in the lane is less than the first threshold.

Further, according to an embodiment of the another aspect of the invention, the determination apparatus is configured to set the passing status for the current vehicle to be impassable when the occupancy proportion of the obstacle in the lane is greater than the second threshold.

Further, according to an embodiment of the another aspect of the invention, the calculation apparatus is further configured to calculate a time to collision (TTC) of the current vehicle with the another vehicle based on the lateral position $D_V$ of the another vehicle, and the time to collision (TTC) is used to determine whether there is a risk of a collision between the current vehicle and the another vehicle.

Further, according to an embodiment of the another aspect of the invention, the calculation apparatus is further configured to: if there is a risk of a collision between the current vehicle and the another vehicle, calculate a safe constraint boundary of the another vehicle based on the lateral position $D_V$ of the another vehicle, the width Wv of the current vehicle, and a safe distance $D_{S3}$ of the vehicle from the another vehicle, where the safe distance $D_{S3}$ of the current vehicle from the another vehicle is related to the velocity of the current vehicle.

Further, according to an embodiment of the another aspect of the invention,

$$\text{Safe constraint boundary of another vehicle} = D_V - \frac{W_V}{2} - D_{S3}.$$

Further, according to an embodiment of the another aspect of the invention, the intervention further includes controlling, based on the safe constraint boundary of the another vehicle, the current vehicle to further adjust a distance $D_V$ of the vehicle from the another vehicle in the passing region, so as to avoid the another vehicle.

Further, according to an embodiment of the the another aspect of the invention, the device further includes: a path planning apparatus configured to generate path planning applied to the current vehicle bypassing an obstacle region based on the passing region and the passing status for the current vehicle.

Further, according to an embodiment of the the another aspect of the invention, the device further includes: an output control apparatus configured to output lateral-direction and longitudinal-direction control applied to the current vehicle based on the generated path planning.

The invention further provides a computer-readable storage medium comprising the features of claim 3.

An advanced driver-assistance system can be provided, where the advanced driver-assistance system is configured with the obstacle avoidance control device described above.

A vehicle can be provided, where the vehicle is configured with the advanced driver-assistance system described above.

According to the obstacle avoidance control method and device provided in the embodiments of the invention, it is possible to, according to vehicle sensor data, calculate a passable region for a current vehicle, determine a passing status for the current vehicle, and adjust values such as a velocity of the current vehicle, a distance of the current vehicle from an obstacle, and a distance of the current vehicle from another vehicle, thereby controlling the vehicle to decelerate and stop or bypass an obstacle region in accordance with a specified trajectory, so that a collision of the vehicle with the obstacle is avoided, or a collision hazard of the vehicle is mitigated.

Additionally, according to the obstacle avoidance control method and device provided in the embodiments of the invention, corresponding path planning may further be made according to the passing region and the passing status for the vehicle, so that the vehicle bypasses the obstacle region in a safe and reliable manner.

**Brief Description of the Drawings**

FIG. 1 is a schematic diagram of working of an obstacle avoidance control system 1000 according to an embodiment of the invention;

FIG. 2 is a schematic diagram of a vehicle traveling according to an obstacle avoidance control system in an embodiment of the invention;

FIG. 3 is a flowchart of a method 3000 for calculating obstacle boundary information according to an obstacle avoidance control system in an embodiment of the invention;

FIG. 4 is a schematic diagram of an obstacle safe boundary calculated according to an obstacle avoidance control system in an embodiment of the invention;

FIG. 5 is a schematic diagram of a lane safe boundary calculated according to an obstacle avoidance control system in an embodiment of the invention;

FIG. 6 is a flowchart of a method 6000 for calculating a safe constraint boundary of another vehicle according to an obstacle avoidance control system in an embodiment of the invention;

FIG. 7 is a schematic diagram of a safe constraint boundary of another vehicle calculated according to an obstacle avoidance control system in an embodiment of the invention;

FIG. 8 is a flowchart of a method for performing passableness determination according to an obstacle avoidance control system in an embodiment of the invention;

FIG. 9 is a schematic diagram of determining a desired lateral movement distance and longitudinal movement distance for a lane being passable according to an obstacle avoidance control system in an embodiment of the invention;

FIG. 10 is a schematic diagram of determining a desired lateral movement distance and longitudinal movement distance for a lane being passable according to an obstacle avoidance control system in an embodiment of the invention;

FIG. 11 is a flowchart of an obstacle avoidance control method 1100 according to an embodiment of the invention;

FIG. 12 is a block diagram of an obstacle avoidance control device 1200 according to an embodiment of the invention; and

FIG. 13 shows a computer device of an obstacle avoidance control method according to an embodiment of the invention.

## Detailed Description of Embodiments

The obstacle avoidance control management method and system in the invention are described below in detail in conjunction with the drawings. It should be noted that the following detailed description of embodiments is exemplary rather than limiting, and is intended to provide a basic understanding of the invention, and is not intended to confirm key or decisive elements of the invention or limit the scope of protection.

The invention is described below with reference to the block diagram descriptions, the block diagrams, and/or the flowcharts of the methods and apparatuses in the embodiments of the invention. It will be understood that each block of these flowchart descriptions and/or the block diagrams, and combinations of the flowchart descriptions and/or the block diagrams, can be implemented by computer program instructions. These computer program instructions may be provided for a processor of a general-purpose computer, a dedicated computer, or another programmable data processing device to generate a machine, so that the instructions executed by the processor of the computer or the another programmable data processing device create components for implementing the functions/operations specified in these flowcharts and/or blocks and/or one or more flow block diagrams.

These computer program instructions may be stored in a computer-readable memory, and the instructions can instruct a computer or another programmable processor to implement the functions in a specific manner, so that the instructions stored in the computer-readable memory generate a manufactured product containing instruction components that implement the functions/operations specified in one or more blocks of the flowcharts and/or the block diagrams.

These computer program instructions may be loaded onto the computer or the another programmable data processor, so that a series of operations and steps are performed on the computer or the another programmable processor, to generate a computer-implemented process. As such, the instructions executed on the computer or the another programmable data processor provide steps for implementing the functions or operations specified in one or more blocks in the flowcharts and/or block diagrams. It should also be noted that in some alternative implementations, the functions/operations shown in the blocks may not occur in the order shown in the flowcharts. For example, two blocks shown in sequence may actually be executed substantially simultaneously or the blocks may sometimes be executed in a reverse order, depending on the functions/operations involved.

The invention provides a method and system for avoidance control of obstacles such as a cone barrel, a square barrel, and a warning post. According to the method and system, a passing region is calculated according to information collected by a vehicle sensor, such as a velocity of a current vehicle (the velocity includes a lateral velocity and a longitudinal velocity of the vehicle), a position of the current vehicle, a width of a lane of the current vehicle, information about an obstacle on the lane, and a safe constraint condition of another vehicle around the lane, so as to determine a passing status for the vehicle and adjust, according to the passing status, values such as the velocity of the current vehicle, a distance of the current vehicle from the obstacle, and a distance of the current vehicle from the another vehicle. Adjusting the above values can control the vehicle to decelerate and stop or bypass an obstacle region in accordance with a specified trajectory, thereby avoiding or mitigating a collision hazard while giving corresponding alert information.

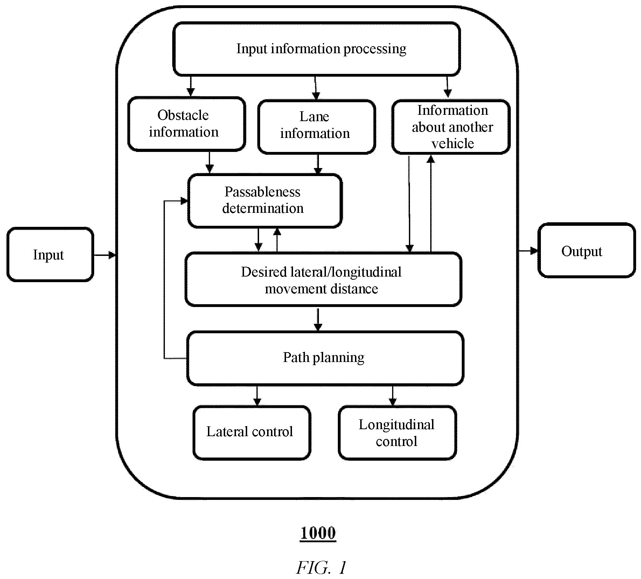

FIG. 1 is a schematic diagram of working of an obstacle avoidance control system 1000 according to an embodiment of the invention. It should be noted that the obstacle avoidance control system 1000 may be implemented as an obstacle avoidance control method, or may be implemented as an obstacle avoidance control device. As shown in FIG. 1, the obstacle avoidance system obtains, through a vehicle sensor (e.g., a camera and a radar sensor), information such as information about a lane of a current vehicle (e.g., a width of the lane and a type of the lane such as a solid line, a dashed line, or a curb), information about the current vehicle (such as a current velocity of the vehicle), information about an obstacle (such as a distance of the obstacle from the current vehicle), and information about another vehicle around (such as a distance of a vehicle closest to the current vehicle from the current vehicle). The obstacle avoidance system 1000 then performs corresponding calculation on the above information, so as to determine a passing status for the vehicle and make path planning. Finally, the system outputs lateral and longitudinal control information of the vehicle, and controls velocity and acceleration of the vehicle in lateral and longitudinal directions using an onboard control unit, e.g., an advanced driver-assistance system domain controller (ADC), a vehicle control unit (VCU), a brake control unit (BCU), an electric power steering (EPS) system, and a continuous damping control (CDC) system.

In the context of the invention, the term "current vehicle" may also be referred to as a host vehicle and a vehicle. According to the method and system of the invention, the Frenet coordinate system may be used to calculate various positions. Specifically, in the Frenet coordinate system that uses the center line of a lane as a reference line, a lateral position of the obstacle and a lateral position of the host vehicle are both relative positions with respect to the center line of the lane. For example, the lateral position of the obstacle is a position of the center of the obstacle to the center line of the lane (i.e., a distance from the center line of the lane), and a lateral position of the another vehicle is a position of the center of a front or rear axle of the another vehicle around to the center line of the lane of the host vehicle.

As known to those skilled in the art, a distance is a signed value in the Frenet or a similar coordinate system. Specifically, a distance on the left side is written with a minus sign, and a distance on the right side is written with a plus sign. For example, the lateral position of the vehicle is a negative value if the vehicle is on the left side of the lane. Therefore, in the context of the invention, adjusting a trajectory of the vehicle includes adjusting distances such as a distance of the host vehicle from the obstacle and a distance of the host vehicle from the another vehicle. For example, the vehicle needs to move towards the left side if a calculated distance of the host vehicle from the obstacle that needs to be adjusted is negative. Similarly, the vehicle needs to move towards the right side if a calculated distance of the host vehicle from the another vehicle that needs to be adjusted is positive. Additionally, adjusting the vehicle further includes adjusting a velocity of the current vehicle. In the context of the invention, the velocity of the vehicle may include a lateral velocity in the lateral direction and a longitudinal velocity in the longitudinal direction.

The term "another vehicle" refers to one or more vehicles that are closest to the current vehicle and may have a risk of a collision with the current vehicle. The "another vehicle" may be determined by estimating trajectories of the host vehicle and the another vehicle around at different sampling moments within a control time, and comparing the longitudinal and lateral positions of the host vehicle with those of the another vehicle around to identify whether there is a risk of a collision.

As shown in FIG. 1, an input includes lane information, traveling information of the host vehicle, obstacle information, and information about another vehicle obtained by various vehicle sensors, where the vehicle sensors include but are not limited to a camera, a radar, etc. The lane information includes the width and the type of the lane. The type of the lane includes a solid-line lane, a curb lane, and a dashed-line lane, where only the dashed-line lane allows the vehicle to cross. The traveling information of the host vehicle includes the width, the velocity, etc. of the vehicle. The obstacle information includes the width of the obstacle, a position of the obstacle in the lane, the distance of the obstacle from the current vehicle, etc. The another vehicle is a vehicle closest to the current vehicle in the current lane or an adjacent lane, and the vehicle (the another vehicle) may collide with the current vehicle. The information about the another vehicle includes a position of the another vehicle in the lane, the distance between the another vehicle and the current vehicle, etc. The above distance information may all be represented by a lateral distance and a longitudinal distance.

The obstacle avoidance system 1000 performs processing according to the obtained information, and specifically, may calculate separately information such as an obstacle safe boundary, a lane safe boundary, and a safe constraint boundary of another vehicle around the current vehicle. The obstacle avoidance system 1000 performs passableness determination based on the obstacle safe boundary and the lane safe boundary, i.e., determine whether the vehicle can pass the lane currently having an obstacle, and whether traveling intervention is needed if the vehicle can pass. If intervention is needed, the system calculates desired adjustment information based on the passableness determination for the lane and the safe constraint boundary (which has a higher priority) of the another vehicle around the vehicle. The adjustment information specifically includes adjusting the velocity of the current vehicle, the distance of the current vehicle from the obstacle (the lateral distance and the longitudinal distance), and the distance of the current vehicle from the another vehicle (the lateral distance and the longitudinal distance), thereby making vehicle movement path planning. The vehicle path planning is fed back to the passableness determination for the lane, so as to iteratively calculate desired lateral and longitudinal movement distance information. Finally the obstacle avoidance system 1000 determines vehicle lateral control and longitudinal control as an output.

Alternatively, in an embodiment, the vehicle EPS performs lateral control in real time, and the vehicle VCU/BCU performs longitudinal control in real time, which enables the vehicle to decelerate and stop or bypass an obstacle region in accordance with a specified trajectory, thereby avoiding or mitigating a collision hazard, and at the same time, prompt information is output through the vehicle CDC, and a double-flashing light is turned on in a timely manner to provide warning information for following vehicles when it is determined that braking is required.

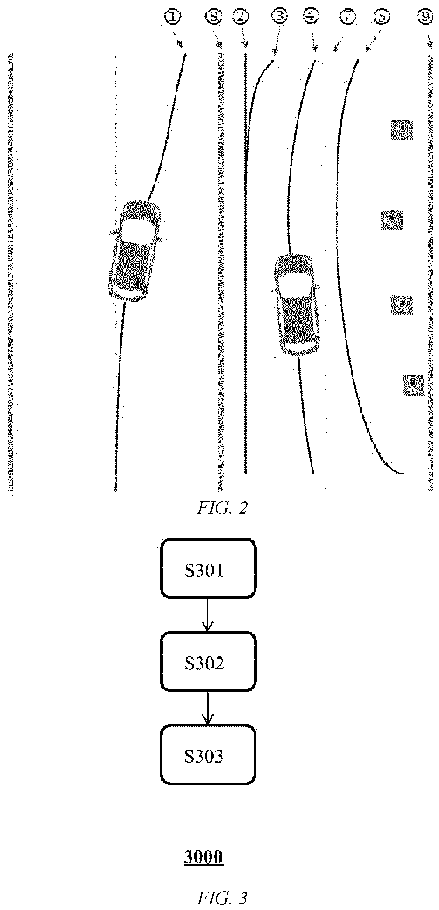

FIG. 2 is a schematic diagram of a vehicle traveling according to an obstacle avoidance control system in an embodiment of the invention. As shown in FIG. 2, ⑦ is the center line of a current lane, ⑧ is the left lane line of the current lane, and ⑨ is the right lane line of the current lane. The obstacle avoidance system according to the invention calculates an obstacle safe boundary ⑤ and a lane safe boundary ② and determines a passing region and a passing status based on position information of an obstacle and lane information, and at the same time, estimates a trajectory ① of the host vehicle and another vehicle around during obstacle avoidance and identifies whether there is a risk of a collision in combination with the state of the host vehicle and a distance from another vehicle, and calculates a constraint boundary ③ of the another vehicle if there is a time to collision, and adjusts a desired position ④ for avoidance based thereon to avoid the another vehicle. Specifically, the more the obstacle occupies the lane, the more the vehicle needs to move to the other side for avoidance, but the vehicle is also affected by a boundary on the other side. The boundary on the other side is related to the type of a lane dividing line and the another vehicle around, the lane dividing line being of a type such as a solid line or a curb which allows for a shorter distance of the vehicle crossing the line than the dividing line being a dashed line, and the another vehicle around is preferentially avoided when there is a risk of a collision with a trajectory of the another vehicle around.

How the obstacle avoidance control system according to an embodiment of the invention calculates obstacle safe boundary information, lane safe boundary information, safe constraint boundary information of the another vehicle, passableness determination, and a desired lateral/longitudinal movement distance is described in detail below.

FIG. 3 is a flowchart of a method 3000 for calculating obstacle boundary information according to an obstacle avoidance control system in an embodiment of the invention. As shown in FIG. 3, the method 3000 includes steps S301, S302, and S303. In step S301, the obstacle avoidance control system searches for an obstacle occupying the most of a current lane on the left and right sides of the lane. In step S302, the obstacle avoidance control system performs hysteresis processing on an obstacle jumping near the center line, so as to prevent a failure to determine plus and minus signs due to the same obstacle jumping between the left and right sides in the identification process. Subsequently, in step S303, the obstacle avoidance control system determines a status of the obstacle occupying the lane. Specifically, there are four states, namely, the obstacle not occupying the lane, the obstacle occupying the lane on the left side, the obstacle occupying the lane on the right side, and the obstacle occupying the lane on both sides. After obtaining a position where the obstacle occupies the lane, the system may calculate a safe boundary of obstacle avoidance according to the position of the obstacle. A method for calculating the safe boundary is described in detail below.

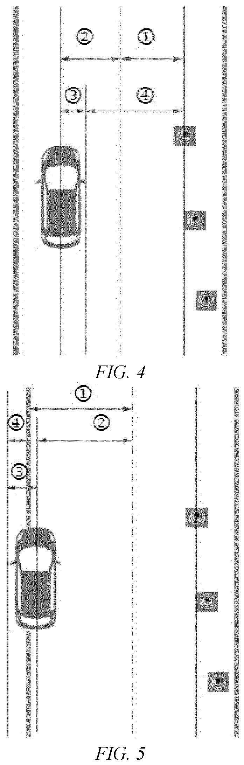

FIG. 4 is a schematic diagram of an obstacle safe boundary calculated according to an obstacle avoidance control system in an embodiment of the invention. As shown in FIG. 4, in the Frenet and a similar coordinate system, distance ① is a lateral position of an obstacle, and specifically, the lateral position of the obstacle is a position of the center of the obstacle to the center line of a lane. As described above, distance ① is a positive value because the obstacle is on the right side of the center line of the lane. Distance ② is a safe boundary constrained by the obstacle. Distance ③ is half of the width of a vehicle, and ③ is also a positive value because the width of the vehicle is a positive value. Distance ④ is a safe distance from an edge of the vehicle to the obstacle, and the distance ④ is a positive value because a cone barrel is on the right side with respect to the vehicle. Therefore, it is obtained that the safe boundary ② = ① - ③ - ④. In the embodiment shown in FIG. 4, the safe boundary ② is a negative value, which means that the host vehicle needs to be adjusted, in particular the distance of the host vehicle from the obstacle. The vehicle needs to move towards the left side to maintain the safe boundary ② because the safe boundary ② is a negative value.

Alternatively, the safe distance ④ is related to a current vehicle velocity of the host vehicle. Specifically, the higher the vehicle velocity, the longer the safe distance. A specific safe distance ④ may be set by a user or a manufacturer according to driving habits of the user. Therefore, adjusting the vehicle may further include adjusting the velocity of the current vehicle. For example, by reducing the vehicle velocity, the safe distance ④ may be correspondingly made smaller, thereby ensuring the safe boundary ②. Additionally or alternatively, a limit of the safe boundary may be set as not being allowed to exceed lane lines on both sides, that is, the safe boundary ② is greater than -0.5 × width of the lane.

Similar to the method for calculating the obstacle safe boundary, a lane safe boundary during the vehicle avoiding the obstacle may be calculated according to the type of the lane line. Specifically, a line type (e.g., a dashed line) which allows the host vehicle to cross has a smaller boundary constraint and a wider passable region than a line type (e.g., a solid line and a curb) which does not allow the host vehicle to cross.

FIG. 5 is a schematic diagram of a lane safe boundary calculated according to an obstacle avoidance control system in an embodiment of the invention. As shown in FIG. 5, distance ① is half of the width of a lane, and the distance ① is a negative value. Distance ② is a safe boundary constrained by the type of a lane line. Distance ③ is half of the width of a vehicle, and the distance ③ is a positive value as described above. Distance ④ is a safe distance of the vehicle being allowed to cross a line, and the distance ④ is a negative value. Therefore, the safe boundary ② = ① - ③ - ④, where the safe distance ④ is related to the type of the lane, and a safe distance of the dashed line is greater than a safe distance of the solid line or the curb. After a corresponding boundary is obtained according to an actual road type, a maximum value on the left side is taken as a boundary constrained by the road type.

As described above, the obstacle avoidance control system further needs to predict a trajectory of the host vehicle and a trajectory of another vehicle around, determine whether there is a risk of a collision, and calculate a safe constraint boundary of the another vehicle around. Generally, a safe boundary of another vehicle has a higher constraint priority than an obstacle safe boundary and a lane safe boundary.

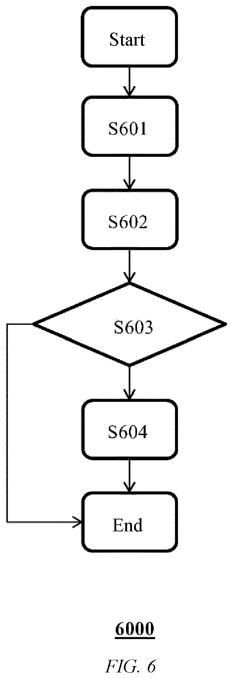

FIG. 6 is a flowchart of a method 6000 for calculating a safe constraint boundary of another vehicle according to an obstacle avoidance control system in an embodiment of the invention. As shown in FIG. 6, the method 6000 includes steps S601, S602, S603, and S604. In step S601, the obstacle avoidance control system estimates a control time based on a desired position of the avoidance control in lateral and longitudinal directions and performs discrete sampling on the time. In step S602, the obstacle avoidance control system estimates trajectories of the host vehicle and another vehicle at different sampling moments within the control time. In step S603, the obstacle avoidance control system compares longitudinal and lateral positions of the host vehicle with those of another vehicle to identify whether there is a risk of a collision, where a distance of identifying the risk of a collision is related to a time to collision (TTC), and in particular, the shorter the TTC, the greater the risk of a collision. Specifically, a user or a manufacturer may set a threshold for the TTC, and if the TTC is less than the set threshold, it is determined that there is a risk of a collision. A safe constraint boundary of the another vehicle is calculated if there is a risk of a collision. If there is no risk of a collision, the method ends, and the safety constraint of the another vehicle is not considered when the system determines desired lateral/longitudinal movement distance information. A method for calculating the safe constraint boundary of the another vehicle is described in detail below for the case where there is a risk of a collision.

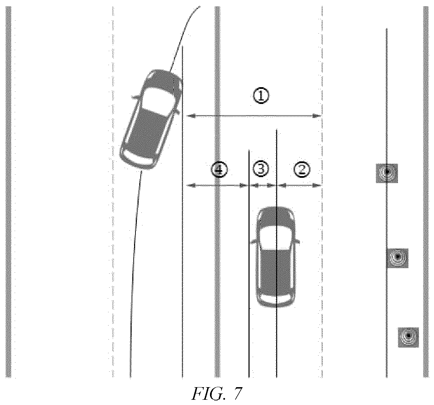

FIG. 7 is a schematic diagram of a safe constraint boundary of another vehicle calculated according to an obstacle avoidance control system in an embodiment of the invention. As shown in FIG. 7, distance ① is an estimated lateral position of another vehicle around, and specifically, the lateral position of the another vehicle around is a distance from the center of a front or rear axle of the another vehicle around to the center line of a lane of the host vehicle, and the distance ① is a negative value. Distance ② is a safe constraint boundary of the another vehicle. Distance ③ is half of the width of the vehicle, and the distance ③ is a positive value. Distance ④ is a safe distance between the vehicle and the another vehicle during avoidance, and the distance ④ is a negative value. Therefore, the safe boundary ② = ① - ③ - ④, where the safe boundary ② is normally a negative value, that is, the vehicle keeps on the left side of the center line of the lane. ② may also be set to be a positive value greater than 0, and in this case, the vehicle may travel towards the right to collide with a cone barrel, so as to avoid a collision with the another vehicle.

Similarly, as described above, the safe distance ④ is related to a vehicle velocity of the host vehicle, and the higher the vehicle velocity, the longer the safe distance. A specific safe distance ④ may be set by a user or a manufacturer according to driving habits of the user. Therefore, in a case where there is another vehicle, values such as the velocity of the current vehicle, a distance of the current vehicle from the obstacle, and a distance of the current vehicle from the another vehicle may be adjusted. Alternatively, a limit of the safe boundary may be set as not being allowed to exceed the center line of the current lane, that is, the safe boundary ② is less than 0.

After an obstacle safe boundary, a lane safe boundary, and the safe constraint boundary of the another vehicle are calculated, the obstacle avoidance control system calculates, based on the above information, a width for which the vehicle can pass in the current lane, thereby determining whether the vehicle can pass (i.e., passableness determination). Specifically, a passing status for the current lane includes the following four states: 1. passable without intervention; 2. passable with intervention; 3. returning to the center of the lane; and 4. impassable. The obstacle avoidance control system calculates a passable width and a lane occupancy proportion based on a position of the obstacle, lane line information, and a constrained boundary, and does not allow the vehicle to pass when the passable width is small or the lane occupancy proportion is high; no intervention is required when there is no lane occupation or the lane occupancy proportion is low; and the vehicle returns to the center of the lane after passing the obstacle without collision is identified. An upper threshold and a lower threshold may be set for the occupancy proportion of the obstacle in the lane, that is, the current vehicle cannot pass when the occupancy proportion of the obstacle in the lane is higher than the upper threshold, can pass with intervention when the occupancy proportion of the obstacle in the lane is between the upper threshold and the lower threshold, and can pass without intervention when the occupancy proportion of the obstacle in the lane is lower than the lower threshold.

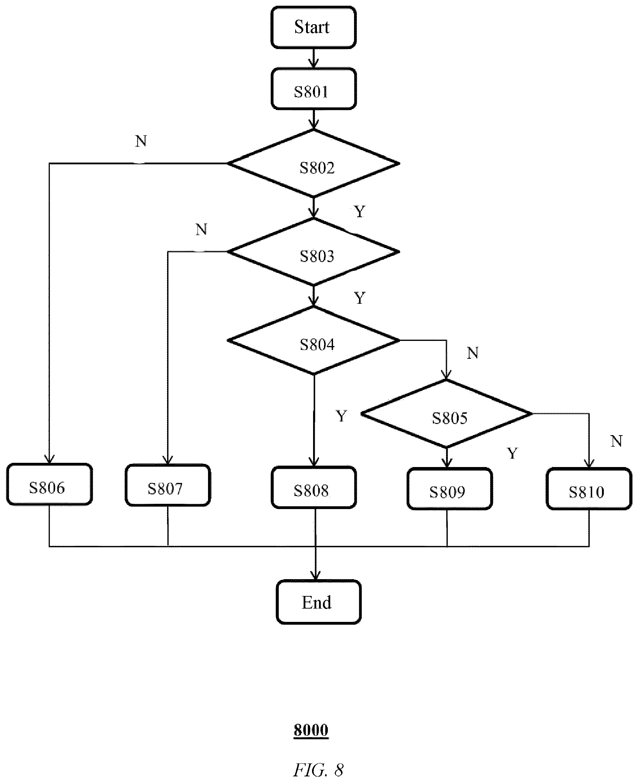

FIG. 8 is a flowchart of a method for performing passableness determination according to an obstacle avoidance control system in an embodiment of the invention. As shown in FIG. 8, the method 8000 includes steps S801 to S810. In step S801, the obstacle avoidance control system calculates a passable width of a vehicle and an occupancy proportion of the obstacle in the lane based on the above information. In step S802, the obstacle avoidance control system first determines whether there is an obstacle occupying the lane. If there is no obstacle occupying the lane, the obstacle avoidance control system determines in step S806 that the lane is passable without intervention. If there is an obstacle occupying the lane, the obstacle avoidance control system determines in step S803 whether the lane is passable. If impassable, the obstacle avoidance control system determines in step S807 that the lane is impassable. If passable, the obstacle avoidance control system determines in step S804 whether an obstacle region has been passed. If passed, the obstacle avoidance control system determines in step S808 that the vehicle returns to the center of the lane. If not passed, the obstacle avoidance control system further determines in step S805 the occupancy proportion of the obstacle in the lane. If the occupancy proportion of the obstacle in the lane is high, the obstacle avoidance control system determines in step S809 that the lane is passable without intervention. If the occupancy proportion of the obstacle in the lane is low, the obstacle avoidance control system determines in step S810 that the lane is passable with intervention. A threshold may be set by a user for the occupancy proportion of the obstacle in the lane, and the occupancy proportion of the obstacle in the lane may be determined by comparing the threshold with a lane occupancy proportion measured by the obstacle avoidance control system.

As described above, the obstacle avoidance control system needs to determine in step S804 whether the obstacle region has been passed. How to determine whether the vehicle has passed the obstacle region is described in detail below. Specifically, the obstacle avoidance control system searches for an obstacle that is most distant from the vehicle in a longitudinal distance, and identifies whether passing the obstacle region brings a risk based on the state and lateral and longitudinal positions from the host vehicle of the most distant obstacle, and identifies that the obstacle region can be passed with no risk when the longitudinal position is small enough, and the lateral position is large enough. The determining thresholds of the lateral position and the longitudinal position are related to a vehicle velocity of the host vehicle, and the higher the vehicle velocity, the greater the corresponding thresholds. When the most distant obstacle disappears, the obstacle avoidance control system identifies that the obstacle region has been passed.

After the obstacle avoidance control system determines the lane passableness and a safe constraint boundary of another vehicle, the obstacle avoidance control system calculates a desired movement distance based on the above data, the distance including a lateral distance and a longitudinal distance. Specifically, the obstacle avoidance control system determines the desired lateral and longitudinal movement distances respectively for two cases where the lane is passable and where the lane is impassable.

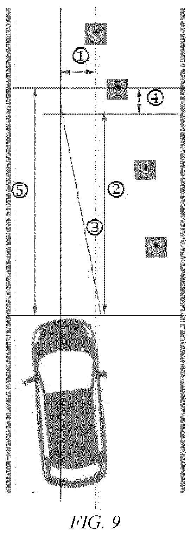

FIG. 9 is a schematic diagram of determining a desired lateral movement distance and longitudinal movement distance for a lane being passable according to an obstacle avoidance control system in an embodiment of the invention. In a case where an obstacle is in the way and is impassable, a vehicle needs to stop at a certain position before the obstacle, so as to avoid as much as possible colliding with the obstacle closest to the vehicle that does not allow the vehicle to pass. In addition, there may be a need to control a lateral position of the vehicle to ensure that the vehicle body stops at a certain angle of inclination because the obstacle may be placed at a certain angle. To achieve this purpose, certain control over the vehicle is required. As shown in FIG. 9, the obstacle close to the center line of the lane is an obstacle most likely to collide with the vehicle. The vehicle movement is therefore calculated on the basis thereof.

In the case where the lane is impassable, distance ① is a desired lateral movement distance, distance ② is a desired longitudinal movement distance, and distance ③ is a desired stopping angle. Moving according to the above distances may ensure that the vehicle is parallel to an oblique line formed by cone barrels, so that the vehicles moves better at a later stage. Distance ④ is a longitudinal safe distance, and distance ⑤ is a longitudinal distance of the closest impassable obstacle. Calculation of the desired lateral distance ① refers to the above method for calculating a boundary, the boundary is calculated by using the found information about the impassable obstacle closest to the host vehicle, and the impassable desired lateral distance ① should not make the host vehicle cross a line and stop. In addition, the desired longitudinal distance ② = ⑤ - ④, where the longitudinal safe distance ④ is related to a vehicle velocity, and the higher the vehicle velocity, the longer the reserved safe distance.

Similarly, as described above, the safe distance ④ may be set by a user or a manufacturer according to driving habits of the user. Finally, the desired stopping angle ③ formed by the vehicle is equal to ①/②. Because a desired vehicle longitudinal velocity is reduced to 0, a desired longitudinal deceleration of the vehicle = -1 $\times$ square of current vehicle velocity/(2 $\times$ desired longitudinal distance).

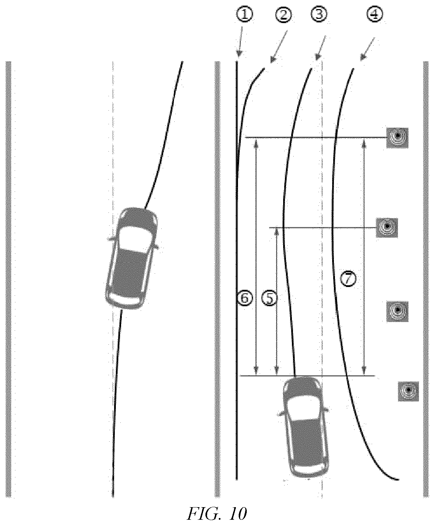

FIG. 10 is a schematic diagram of determining a desired lateral movement distance and longitudinal movement distance for a lane being passable according to an obstacle avoidance control system in an embodiment of the invention. As shown in FIG. 10, in a case where the lane is passable, a vehicle needs to consider a risk of a collision of another vehicle around as well, and moves within a passable lane region according to a safe constraint boundary of the another vehicle.

In the case where the lane is passable, distance ① is a left lane line boundary, distance ② is a left vehicle boundary, distance ③ is a desired lateral movement distance, distance ④ is a right boundary, distance ⑤ a longitudinal position of an obstacle occupying the most of the lane, distance ⑥ is a longitudinal position of the most distant obstacle, and distance ⑦ a desired longitudinal movement distance. The desired lateral distance ③ = 0.5$\times$ (① + ④). The vehicle is not allowed to exceed the distance ② at the same time when the another vehicle around is considered (the safe boundary of the another vehicle has a higher priority than an obstacle safe boundary and a lane safe boundary). The desired longitudinal distance o needs to consider both ⑤ and ⑥, and refers preferentially to the longitudinal position ⑥ of the most distant obstacle, and the longitudinal position ⑤ of the obstacle occupying the most of the lane has an increased priority when a lane occupancy proportion of the obstacle occupying the most of the lane is significantly greater than that of the most distant obstacle.

Additionally, during avoidance, in order to ensure that the lateral distance ③ needs to be enough to avoid the obstacle when approaching the obstacle, there is a need to limit a longitudinal velocity based on the desired longitudinal distance, and reserve enough time for completing a lateral movement. Desired time for the lateral movement = (③ - actual lateral position)/desired lateral velocity. Therefore, a desired lateral deceleration = (⑦ - current vehicle velocity $\times$ desired time for lateral movement)/(0.5 $\times$ square of desired lateral movement time), and the deceleration does not exceed 0. In addition, a desired velocity = vehicle velocity + accumulated control time $\times$ desired deceleration.

Alternatively, after obtaining the desired lateral and longitudinal movement distances and desired velocity determined for the lane being passable, the obstacle avoidance control system may also feed back the above information to passableness determination, to repeatedly and iteratively determine whether the current lane is passable. Finally, the obstacle avoidance control system makes lateral and longitudinal control.

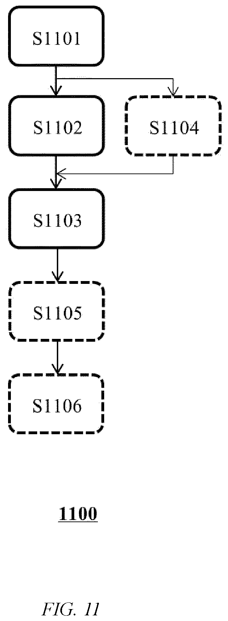

FIG. 11 is a flowchart of an obstacle avoidance control method 1100 according to an embodiment of the invention.

The obstacle avoidance control method 1100 includes the steps of: S1101: receiving vehicle sensor data; S1102: calculating an obstacle safe boundary and a lane safe boundary based on the vehicle sensor data; and S1103: determining a passing region and a passing status for a current vehicle according to the obstacle safe boundary and the lane safe boundary.

The vehicle sensor data includes a width of a current lane, a velocity of the current vehicle, a lateral position $D_B$ of an obstacle, and a lateral position $D_V$ of another vehicle. The obstacle safe boundary is calculated based on the lateral position $D_B$ of the obstacle, the width Wv of the current vehicle, and a safe distance $D_{S1}$ of the current vehicle from the obstacle, where the safe distance $D_{S1}$ of the current vehicle from the obstacle is related to the velocity of the current

$$\text{Obstacle safe boundary} = D_B - \frac{W_V}{2} - D_{S1}$$

vehicle. More specifically,                                                                 .

Additionally, the lane safe boundary is calculated based on the width $W_R$ of the current lane, the width Wv of the current vehicle, and a safe distance $D_{S2}$ of the current vehicle crossing the current lane, where the safe distance $D_{S2}$ of the current vehicle crossing the current lane is related to a type of the current lane. More specifically,

$$\text{Lane safe boundary} = \frac{W_R}{2} - \frac{W_V}{2} - D_{S2}$$

.

The passing region for the current vehicle is a region between the obstacle safe boundary and the lane safe boundary. The passing status for the current vehicle includes passable without intervention, passable with intervention, and impassable. The intervention includes adjusting the velocity of the current vehicle, a distance of the current vehicle from the obstacle, and a distance of the current vehicle from the another vehicle, where the velocity may include a lateral velocity and a longitudinal velocity, and the distance includes a lateral distance and a longitudinal distance.

More specifically, the determining a passing status for the current vehicle may include: calculating an occupancy proportion of the obstacle in the lane based on the obstacle safe boundary and the lane safe boundary. The determining a passing status for the current vehicle may further include setting the passing status for the current vehicle to be passable with intervention when the occupancy proportion of the obstacle in the lane is greater than a first threshold and less than a second threshold. The determining a passing status for the current vehicle may further include setting the passing status for the current vehicle to be passable without intervention when the occupancy proportion of the obstacle in the lane is less than the first threshold. The determining a passing status for the current vehicle may further include: setting the passing status for the current vehicle to be impassable when the occupancy proportion of the obstacle in the lane is greater than the second threshold.

Additionally or alternatively, the method may further include: step S1104: calculating a time to collision (TTC) of the current vehicle with the another vehicle based on the lateral position $D_V$ of the another vehicle, where the time to collision (TTC) is used to determine whether there is a risk of a collision between the current vehicle and the another vehicle around the lane. S1104 further includes: if there is a risk of a collision between the current vehicle and the another vehicle, calculating a safe constraint boundary of the another vehicle based on the lateral position $D_V$ of the another vehicle, the width Wv of the current vehicle, and a safe distance $D_{S3}$ of the current vehicle from the another vehicle, where the safe distance $D_{S3}$ of the current vehicle from the another vehicle is related to the velocity of the current vehicle. Specifically,

$$\text{Safe constraint boundary of another vehicle} = D_V - \frac{W_V}{2} - D_{S3}$$

. The safe constraint boundary of the another vehicle may be fed back to step S1103 to be used to further determine the passing status for the current vehicle.

Therefore, the intervention may further include: controlling the vehicle to adjust a distance $D_V$ of the vehicle in the passing region from the another vehicle based on the safe constraint boundary of the another vehicle, so as to avoid the another vehicle.

Alternatively, the method further includes step S 1105: generating path planning applied to the current vehicle bypassing an obstacle region based on the passing region and the passing status for the current vehicle.

Alternatively, the method further includes step S1106: outputting lateral-direction and longitudinal-direction control applied to the current vehicle based on the generated path planning.

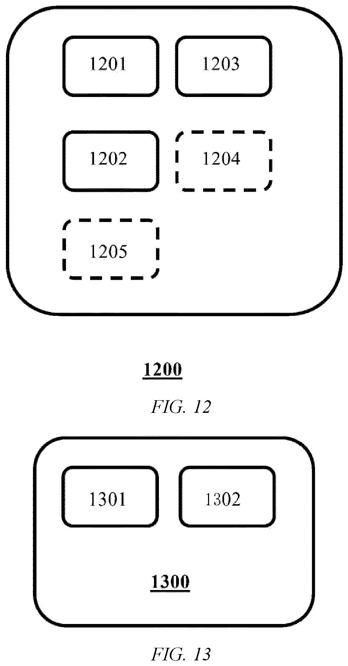

FIG. 12 is a block diagram of an obstacle avoidance control device 1200 according to an embodiment of the invention. An obstacle avoidance control device, the device including: a receiving apparatus 1201 configured to receive vehicle sensor data; a calculation apparatus 1202 configured to calculate an obstacle safe boundary and a lane safe boundary based on the vehicle sensor data; a determination apparatus 1203 configured to determine a passing region and a passing status for the current vehicle according to the obstacle safe boundary and the lane safe boundary.

The vehicle sensor data includes a width of a current lane, a velocity of the current vehicle, a lateral position $D_B$ of an obstacle, and a lateral position $D_V$ of another vehicle. The calculation apparatus may further be configured to calculate the obstacle safe boundary based on the lateral position $D_B$ of the obstacle, the width $W_V$ of the current vehicle, and a safe distance $D_{S1}$ of the vehicle from the obstacle, where the safe distance $D_{S1}$ of the current vehicle from the obstacle is related

$$\text{Obstacle safe boundary } = D_B - \frac{W_V}{2} - D_{S1}$$

to the velocity of the current vehicle. Specifically,

The calculation apparatus is further configured to calculate the lane safe boundary based on the width $W_R$ of the current lane, the width Wv of the current vehicle, and a safe distance $D_{S2}$ of the vehicle crossing the current lane, where the safe distance $D_{S2}$ of the current vehicle crossing the current lane is related to a type of the current lane. Specifically,

$$\text{Lane safe boundary } = \frac{W_R}{2} - \frac{W_V}{2} - D_{S2}$$

The passing region for the current vehicle is a region between the obstacle safe boundary and the lane safe boundary. The passing status for the current vehicle includes passable without intervention, passable with intervention, and impassable. The intervention includes adjusting the velocity of the current vehicle, a distance of the current vehicle from the obstacle, and a distance of the current vehicle from the another vehicle, where the velocity may include a lateral velocity and a longitudinal velocity, and the distance includes a lateral distance and a longitudinal distance.

More specifically, the determination apparatus being configured to determine the passing status for the current vehicle includes: calculating an occupancy proportion of the obstacle in the lane based on the obstacle safe boundary and the lane safe boundary. The determination apparatus being able to be configured to determine the passing status for the current vehicle further includes: setting the passing status for the current vehicle to be passable with intervention when the occupancy proportion of the obstacle in the lane is greater than a first threshold and less than a second threshold. The determination apparatus being able to be configured to determine the passing status for the current vehicle further includes: setting the passing status for the current vehicle to be passable without intervention when the occupancy proportion of the obstacle in the lane is less than the first threshold. The determination apparatus being able to be configured to determine the passing status for the current vehicle further includes: setting the passing status for the current vehicle to be impassable when the occupancy proportion of the obstacle in the lane is greater than the second threshold.

The calculation apparatus may further be configured to calculate a time to collision (TTC) of the current vehicle with the another vehicle based on the lateral position $D_V$ of the another vehicle, where the time to collision (TTC) is used to determine whether there is a risk of a collision between the current vehicle and the another vehicle around the lane.

Further, according to an embodiment of the another aspect of the invention, the calculation apparatus is further configured to: if there is a risk of a collision between the current vehicle and the another vehicle, calculate a safe constraint boundary of the another vehicle based on the lateral position $D_V$ of the another vehicle, the width Wv of the current vehicle, and a safe distance $D_{S3}$ of the current vehicle from the another vehicle, where the safe distance $D_{S3}$ of the current vehicle from the another vehicle is related to the velocity of the current vehicle. Specifically,

$$\text{Safe constraint boundary of another vehicle } = D_V - \frac{W_V}{2} - D_{S3}$$

. The safe constraint boundary of the another vehicle may be fed back to step S1103 to be used to further determine the passing status for the current vehicle.

Therefore, the intervention may further include controlling the vehicle to further adjust a distance $D_V$ of the vehicle in the passing region from the another vehicle based on the safe constraint boundary of the another vehicle, so as to avoid the another vehicle around the vehicle.

Alternatively, the device may further include: a path planning apparatus 1204 configured to generate path planning applied to the current vehicle bypassing an obstacle region based on the passing region and the passing status for the current vehicle.

Alternatively, the device may further include: an output control apparatus 1205 configured to output lateral-direction and longitudinal-direction control applied to the current vehicle based on the generated path planning.

The invention further provides an advanced driver-assistance system (ADAS), where the advanced driver-assistance system is configured with the obstacle avoidance control device described above, so that the ADAS may implement the above obstacle avoidance control method or functions of the above obstacle avoidance control device.

The invention further provides a vehicle, where the vehicle is configured with the advanced driver-assistance system (ADAS) described above, and the ADAS is capable of implementing the above obstacle avoidance control method or functions of the above obstacle avoidance control device.

FIG. 13 shows a computer device of an obstacle avoidance control method according to an embodiment of the invention. As shown in FIG. 13, the computer device 1300 includes a memory 1301 and a processor 1302. Although not shown, the computer device 1300 further includes a computer program stored on the memory 1301 and executable on the processor 1302. The processor implements the steps of the method shown in the description when executing the program.

Additionally, as described above, the invention may also be implemented as a recording medium, in which a program for enabling a computer to perform the obstacle avoidance control method described above is stored.

Here, various recording media, such as disks (e.g., a magnetic disk, an optical disc, etc.), cards (e.g., a memory card, an optical card, etc.), semiconductor memories (e.g., a ROM, a non-volatile memory, etc.), and tapes (e.g., a magnetic tape, a cassette tape, etc.), can be used as the recording medium.

By recording, in these recording media, a computer program that enables a computer to perform the obstacle avoidance control method in the embodiments above or a computer program that enables a computer to implement functions of the obstacle avoidance control method in the embodiments above, and circulating the computer program, costs are reduced, and portability and versatility are improved.

Moreover, the recording medium above is loaded onto a computer, a computer program recorded in the recording medium is read by the computer and stored in a memory, and processors (central processing unit (CPU) and micro processing unit (MPU)) provided in the computer read and execute the computer program, and thus, the computer can perform the obstacle avoidance control method in the embodiments above and implement functions of the apparatuses of the obstacle avoidance control method in the embodiments above.

Those of ordinary skill in the art should understand that the invention is not limited to the embodiments above, and the invention can be implemented in many other forms without departing from the scope thereof. Therefore, the presented examples and embodiments are regarded to be schematic rather than restrictive, and without departing from the scope of the invention that is defined by the appended claims, the invention may cover various changes and replacements.

**Claims**

1. An obstacle avoidance control method, comprising the steps of:

   receiving vehicle sensor data (S1101), which comprises a width of a current lane $W_R$ of the current vehicle, a velocity of the current vehicle, and a lateral position $D_B$ of an obstacle, wherein the lateral position $D_B$ of an obstacle is a position of the center of the obstacle to the center line of the current lane;
   calculating an obstacle safe boundary and a lane safe boundary based on the vehicle sensor data (S1102), wherein the obstacle safe boundary is calculated based on the following formula:

$$\text{Obstacle safe boundary} = D_B - \frac{W_V}{2} - D_{S1} \, ,$$

   wherein Wv is a width of the current vehicle, and $D_{S1}$ is a safe distance of the current vehicle from the obstacle, wherein the safe distance $D_{S1}$ of the current vehicle from the obstacle is related to the velocity of the current vehicle, and wherein the lane safe boundary is calculated based on the following formula:

$$\text{Lane safe boundary} = \frac{W_R}{2} - \frac{W_V}{2} - D_{S2} \, ,$$

   wherein $D_{S2}$ is a safe distance of the current vehicle crossing the current lane and is related to a type of the current lane of the current vehicle; and
   determining a passing region and a passing status for a current vehicle according to the obstacle safe boundary and the lane safe boundary (S1103).

2. An obstacle avoidance control device, comprising:

   a receiving apparatus (1201) configured to receive vehicle sensor data, which comprises a width of a current lane $W_R$ of the current vehicle, a velocity of the current vehicle, and a lateral position $D_B$ of an obstacle, wherein the lateral position $D_B$ of an obstacle is a position of the center of the obstacle to the center line of the current lane;
   a calculation apparatus (1202) configured to calculate an obstacle safe boundary and a lane safe boundary based on the vehicle sensor data, wherein the obstacle safe boundary is calculated based on the following formula:

$$\text{Obstacle safe boundary} = D_B - \frac{W_V}{2} - D_{S1}$$,

wherein Wv is a width of the current vehicle, and $D_{S1}$ is a safe distance of the current vehicle from the obstacle, wherein the safe distance $D_{S1}$ of the current vehicle from the obstacle is related to the velocity of the current vehicle, and wherein the lane safe boundary is calculated based on the following formula:

$$\text{Lane safe boundary} = \frac{W_R}{2} - \frac{W_V}{2} - D_{S2}$$,

wherein $D_{S2}$ is a safe distance of the current vehicle crossing the current lane and is related to a type of the current lane of the current vehicle; and
a determination apparatus (1203) configured to determine a passing region and a passing status for a current vehicle according to the obstacle safe boundary and the lane safe boundary.

3. A computer-readable storage medium having instructions stored therein, wherein the instructions, when executed by a processor, cause the processor to perform an obstacle avoidance control method comprising the steps of:

receiving vehicle sensor data (S1101), which comprises a width of a current lane $W_R$ of the current vehicle, a velocity of the current vehicle, and a lateral position $D_B$ of an obstacle, wherein the lateral position $D_B$ of an obstacle is a position of the center of the obstacle to the center line of the current lane;
calculating an obstacle safe boundary and a lane safe boundary based on the vehicle sensor data (S1102), wherein the obstacle safe boundary is calculated based on the following formula:

$$\text{Obstacle safe boundary} = D_B - \frac{W_V}{2} - D_{S1}$$,

wherein Wv is a width of the current vehicle, and $D_{S1}$ is a safe distance of the current vehicle from the obstacle, wherein the safe distance $D_{S1}$ of the current vehicle from the obstacle is related to the velocity of the current vehicle, and wherein the lane safe boundary is calculated based on the following formula:

$$\text{Lane safe boundary} = \frac{W_R}{2} - \frac{W_V}{2} - D_{S2}$$,

wherein $D_{S2}$ is a safe distance of the current vehicle crossing the current lane and is related to a type of the current lane of the current vehicle; and
determining a passing region and a passing status for a current vehicle according to the obstacle safe boundary and the lane safe boundary (S1103).

**Patentansprüche**

1. Steuerungsverfahren zur Hindernisvermeidung, das die folgenden Schritte umfasst:

Empfangen von Fahrzeugsensordaten (S1101), die eine Breite einer aktuellen Spur $W_R$ des aktuellen Fahrzeugs, eine Geschwindigkeit des aktuellen Fahrzeugs und eine laterale Position $D_B$ eines Hindernisses aufweisen, wobei die laterale Position $D_B$ eines Hindernisses eine Position der Mitte des Hindernisses bezüglich der Mittellinie der aktuellen Spur ist;
Berechnen einer sicheren Hindernisgrenze und einer sicheren Spurgrenze basierend auf den Fahrzeugsensordaten (S1102), wobei die sichere Hindernisgrenze basierend auf der folgenden Formel berechnet wird:

$$\texttt{Sichere Hindernisgrenze} = D_B - \frac{W_V}{2} - D_{S1}$$,

wobei $W_V$ eine Breite des aktuellen Fahrzeugs ist und $D_{S1}$ ein sicherer Abstand des aktuellen Fahrzeugs vom Hindernis ist, wobei der sichere Abstand $D_{S1}$ des aktuellen Fahrzeugs vom Hindernis sich auf die Geschwindigkeit des aktuellen Fahrzeugs bezieht und wobei die sichere Spurgrenze basierend auf der folgenden Formel berechnet wird:

$$\text{Sichere Spurgrenze} = \frac{W_R}{2} - \frac{W_V}{2} - D_{S2},$$

wobei $D_{S2}$ ein sicherer Abstand des aktuellen Fahrzeugs ist, das die aktuelle Spur kreuzt, und sich auf einen Typ der aktuellen Spur des aktuellen Fahrzeugs bezieht; und Bestimmen einer Passierregion und eines Passierstatus für ein aktuelles Fahrzeug entsprechend der sicheren Hindernisgrenze und der sicheren Spurgrenze (S1103).

2. Vorrichtung zur Hindernisvermeidung, die Folgendes aufweist:

eine Empfangseinrichtung (1201), ausgelegt zum Empfangen von Fahrzeugsensordaten, die eine Breite einer aktuellen Spur $W_R$ des aktuellen Fahrzeugs, eine Geschwindigkeit des aktuellen Fahrzeugs und eine laterale Position $D_B$ eines Hindernisses aufweisen, wobei die laterale Position $D_B$ eines Hindernisses eine Position der Mitte des Hindernisses bezüglich der Mittellinie der aktuellen Spur ist;
eine Berechnungseinrichtung (1202), ausgelegt zum Berechnen einer sicheren Hindernisgrenze und einer sicheren Spurgrenze basierend auf den Fahrzeugsensordaten, wobei die sichere Hindernisgrenze basierend auf der folgenden Formel berechnet wird:

$$\text{Sichere Hindernisgrenze} = D_B - \frac{W_V}{2} - D_{S1},$$

wobei $W_V$ eine Breite des aktuellen Fahrzeugs ist und $D_{S1}$ ein sicherer Abstand des aktuellen Fahrzeugs vom Hindernis ist, wobei der sichere Abstand $D_{S1}$ des aktuellen Fahrzeugs vom Hindernis sich auf die Geschwindigkeit des aktuellen Fahrzeugs bezieht und wobei die sichere Spurgrenze basierend auf der folgenden Formel berechnet wird:

$$\text{Sichere Spurgrenze} = \frac{W_R}{2} - \frac{W_V}{2} - D_{S2},$$

wobei $D_{S2}$ ein sicherer Abstand des aktuellen Fahrzeugs ist, das die aktuelle Spur kreuzt, und sich auf einen Typ der aktuellen Spur des aktuellen Fahrzeugs bezieht; und
eine Bestimmungseinrichtung (1203), ausgelegt zum Bestimmen einer Passierregion und eines Passierstatus für ein aktuelles Fahrzeug entsprechend der sicheren Hindernisgrenze und der sicheren Spurgrenze.

3. Computerlesbares Speicherungsmedium mit darin gespeicherten Anweisungen, die, wenn sie durch einen Prozessor ausgeführt werden, den Prozessor veranlassen, ein Steuerungsverfahren zur Hindernisvermeidung durchzuführen, das die folgenden Schritte umfasst:

Empfangen von Fahrzeugsensordaten (S1101), die eine Breite einer aktuellen Spur $W_R$ des aktuellen Fahrzeugs, eine Geschwindigkeit des aktuellen Fahrzeugs und eine laterale Position $D_B$ eines Hindernisses aufweisen, wobei die laterale Position $D_B$ eines Hindernisses eine Position der Mitte des Hindernisses bezüglich der Mittellinie der aktuellen Spur ist;
Berechnen einer sicheren Hindernisgrenze und einer sicheren Spurgrenze basierend auf den Fahrzeugsensordaten (S1102), wobei die sichere Hindernisgrenze basierend auf der folgenden Formel berechnet wird:

$$\text{Sichere Hindernisgrenze} = D_B - \frac{W_V}{2} - D_{S1},$$

wobei $W_V$ eine Breite des aktuellen Fahrzeugs ist und $D_{S1}$ ein sicherer Abstand des aktuellen Fahrzeugs vom Hindernis ist, wobei der sichere Abstand $D_{S1}$ des aktuellen Fahrzeugs vom Hindernis sich auf die Geschwindigkeit des aktuellen Fahrzeugs bezieht und wobei die sichere Spurgrenze basierend auf der folgenden Formel berechnet wird:

$$\text{Sichere Spurgrenze} = \frac{W_R}{2} - \frac{W_V}{2} - D_{S2},$$

wobei $D_{S2}$ ein sicherer Abstand des aktuellen Fahrzeugs ist, das die aktuelle Spur kreuzt, und sich auf einen Typ der aktuellen Spur des aktuellen Fahrzeugs bezieht; und
Bestimmen einer Passierregion und eines Passierstatus für ein aktuelles Fahrzeug entsprechend der sicheren Hindernisgrenze und der sicheren Spurgrenze (S1103).

**Revendications**

1. Procédé de commande pour évitement d'obstacle, comprenant les étapes de :

   la réception de données de capteur de véhicule (S1101), qui comprennent une largeur d'une voie actuelle $W_R$ du véhicule actuel, une vitesse du véhicule actuel, et une position latérale $D_B$ d'un obstacle, dans lequel la position latérale $D_B$ d'un obstacle est une position du centre de l'obstacle par rapport à la ligne centrale de la voie actuelle ;
   le calcul d'une limite de sécurité d'obstacle et d'une limite de sécurité de voie sur la base des données de capteur de véhicule (S1102), dans lequel la limite de sécurité d'obstacle est calculée sur la base de la formule suivante :

   $$\text{Limite de sécurité d'obstacle} = D_B - \frac{W_V}{2} - D_{S1},$$

   $W_V$ étant une largeur du véhicule actuel, et $D_{S1}$ étant une distance de sécurité du véhicule actuel relativement à l'obstacle, dans lequel la distance de sécurité $D_{S1}$ du véhicule actuel relativement à l'obstacle est connexe à la vitesse du véhicule actuel, et dans lequel la limite de sécurité de voie est calculée sur la base de la formule suivante :

   $$\text{Limite de sécurité de voie} = \frac{W_R}{2} - \frac{W_V}{2} - D_{S2},$$

   $D_{S2}$ étant une distance de sécurité du véhicule actuel croisant la voie actuelle et étant connexe à un type de la voie actuelle du véhicule actuel ; et
   la détermination d'une région de passage et d'un état de passage pour un véhicule actuel selon la limite de sécurité d'obstacle et la limite de sécurité de voie (S1103).

2. Dispositif de commande pour évitement d'obstacle, comprenant :

   un appareil de réception (1201) configuré pour recevoir des données de capteur de véhicule, qui comprend une largeur d'une voie actuelle $W_R$ du véhicule actuel, une vitesse du véhicule actuel, et une position latérale $D_B$ d'un obstacle, dans lequel la position latérale $D_B$ d'un obstacle est une position du centre de l'obstacle par rapport à la ligne centrale de la voie actuelle ;
   un appareil de calcul (1202) configuré pour calculer une limite de sécurité d'obstacle et une limite de sécurité de voie sur la base des données de capteur de véhicule, dans lequel la limite de sécurité d'obstacle est calculée sur la base de la formule suivante :

   $$\text{Limite de sécurité d'obstacle} = D_B - \frac{W_V}{2} - D_{S1},$$

   $W_V$ étant une largeur du véhicule actuel, et $D_{S1}$ étant une distance de sécurité du véhicule actuel relativement à l'obstacle, dans lequel la distance de sécurité $D_{S1}$ du véhicule actuel relativement à l'obstacle est connexe à la vitesse du véhicule actuel, et dans lequel la limite de sécurité de voie est calculée sur la base de la formule suivante :

   $$\text{Limite de sécurité de voie} = \frac{W_R}{2} - \frac{W_V}{2} - D_{S2},$$

   $D_{S2}$ étant une distance de sécurité du véhicule actuel croisant la voie actuelle et étant connexe à un type de la voie actuelle du véhicule actuel ; et
   un appareil de détermination (1203) configuré pour déterminer une région de passage et un état de passage pour un véhicule actuel selon la limite de sécurité d'obstacle et la limite de sécurité de voie.

3. Support de stockage lisible par computer ayant des instructions stockées dans celui-ci, dans lequel les instructions, lorsqu'elles sont exécutées par un processeur, amènent le processeur à réaliser un procédé de commande pour évitement d'obstacle comprenant les étapes de :

   la réception de données de capteur de véhicule (S1101), qui comprennent une largeur d'une voie actuelle $W_R$ du véhicule actuel, une vitesse du véhicule actuel, et une position latérale $D_B$ d'un obstacle, dans lequel la position latérale $D_B$ d'un obstacle est une position du centre de l'obstacle par rapport à la ligne centrale de la voie actuelle ; le calcul d'une limite de sécurité d'obstacle et d'une limite de sécurité de voie sur la base des données de capteur de véhicule (S1102), dans lequel la limite de sécurité d'obstacle est calculée sur la base de la formule suivante :

$$\text{Limite de sécurité d'obstacle} = D_B - \frac{W_V}{2} - D_{S1},$$

$W_V$ étant une largeur du véhicule actuel, et $D_{S1}$ étant une distance de sécurité du véhicule actuel relativement à l'obstacle, dans lequel la distance de sécurité $D_{S1}$ du véhicule actuel relativement à l'obstacle est connexe à la vitesse du véhicule actuel, et dans lequel la limite de sécurité de voie est calculée sur la base de la formule suivante :

$$\text{Limite de sécurité de voie} = \frac{W_R}{2} - \frac{W_V}{2} - D_{S2},$$

$D_{S2}$ étant une distance de sécurité du véhicule actuel croisant la voie actuelle et étant connexe à un type de la voie actuelle du véhicule actuel ; et

la détermination d'une région de passage et d'un état de passage pour un véhicule actuel selon la limite de sécurité d'obstacle et la limite de sécurité de voie (S1103).

**1000**

*FIG. 1*

*FIG. 2*

**3000**

*FIG. 3*

FIG. 4

FIG. 5

**6000**

*FIG. 6*

FIG. 7

**8000**

*FIG. 8*

*FIG. 9*

FIG. 10

**1100**

*FIG. 11*

**1200**

*FIG. 12*

*FIG. 13*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016024318 A1